# EUROPEAN PATENT APPLICATION

(11) **EP 4 707 065 A1**
(43) Date of publication of application: **11.03.2026**
(21) Application number: 25198370.6
(22) Date of filing: 27.08.2025
(51) Int. Cl.: B60N 2/02, B60N 2/07, B60N 2/06, B60N 2/08, B60N 2/90, F16H 19/04

(54) **APPARATUS FOR MOVING SEAT RAIL FOR VEHICLE**

(30) Priority: 05.09.2024 KR 20240120881
(71) Applicant: Hyundai Transys Inc., Chungcheongnam-do 31930 (KR)
(72) Inventor: LEE, Young Sun, 18463 Hwaseong-si, Gyeonggi-do (KR)
(74) Representative: Viering, Jentschura & Partner mbB Patent- und Rechtsanwälte

(57) **Abstract**

An apparatus for moving a seat rail for a vehicle includes a spur gear configured to be movable along a rack gear and having at least one locking member, a pinion pin having one end inserted into an inner-diameter portion of the spur gear to support the locking member, and a clutch drum configured to interrupt transmission of power to the spur gear.

## Description

### CROSS-REFERENCE TO RELATED APPLICATIONS

This application claims priority to and the benefit of Korean Patent Application No. 10-2024-0120881 filed in the Korean Intellectual Property Office on September 5, 2024, the entire contents of which are incorporated herein by reference.

### TECHNICAL FIELD

The present disclosure relates to an apparatus for moving a seat rail for a vehicle.

### BACKGROUND

In general, seats may be mounted in a vehicle. The vehicle seat may include a seatback configured to support a passenger's upper body, a seat cushion configured to support the passenger's lower body, and a headrest configured to support the passenger's head.

Seat rails, which are applied to second-row or third-row seats in sport utility vehicles (SUVs) or multi-purpose vehicles (MPVs), are applied as long rails longer in length than seat rails mounted in general passenger vehicles.

The vehicle seats may be classified into power seats and manual seats. The power seat may be moved to a desired position by an operation of a motor performed only by an operation of a switch. The manual seat may be moved by a manual operation.

A seat rail for a vehicle may include a lower rail and an upper rail. The lower rail is fixed to a floor panel. The upper rail coupled to the lower rail, configured to be movable forward or rearward along the lower rail, and connected to the vehicle seat. In the case of the power seat in which the upper rail is moved by the motor, a plurality of gears (pinion gears, rack gears, etc.) configured to move the upper rail may be mounted in the lower rail.

However, the power-driven seat rail for a vehicle in the related art is not equipped with a separate control device. As such, it is difficult to quickly move or stop the vehicle seat.

### [Document of Related Art]

### [Patent Document]

(Patent Document 1) Korean Patent Application Laid-Open No. 10-2023-0161765 (published on November 28, 2023)

### SUMMARY OF DISCLOSURE

The present disclosure has been made in an effort to solve the above-mentioned problem, and an object of the present disclosure is to provide an apparatus for moving a seat rail for a vehicle, in which first and second locking members provided in an inner-diameter portion of a spur gear are fitted by a disengagement operation of a clutch drum, such that power from a power source may be transmitted to the spur gear via a pinion pin.

The present disclosure has also been made in an effort to provide an apparatus for moving a seat rail for a vehicle, in which first and second locking members provided in an inner-diameter portion of a spur gear are released by an engagement operation of a clutch drum, such that power from a power source may be prevented from being transmitted to the spur gear via a pinion pin.

In order to achieve the above-mentioned object, the present disclosure provides an apparatus for moving a seat rail for a vehicle. The apparatus may include: a spur gear configured to be movable along a rack gear and having at least one locking member; a pinion pin having one end inserted into an inner-diameter portion of the spur gear to support the at least one locking member; and a clutch drum configured to interrupt transmission of power from the pinion pin to the spur gear.

In addition, the at least one locking member may include a first locking member and a second locking member, the first locking member and the second locking member may be supported by the one end of the pinion pin, the clutch drum may be coupled to the one end of the pinion pin so as to be opposite to the spur gear and configured to be elastically supported by an elastic member, and at least one coupling protrusion disposed on one surface of the clutch drum may be configured to be inserted between the first locking member and the second locking member and to interrupt the transmission of power to the spur gear, the at least one coupling protrusion including a first coupling protrusion and a second coupling protrusion.

In addition, a first key may be disposed on an inner-diameter portion of the first coupling protrusion, and a second key is disposed on an inner-diameter portion of the second coupling protrusion, the first key and the second key may be inserted into the first and second key grooves disposed at the one end of the pinion pin, and the first key and the second key may be slidable along the first and second key grooves, respectively.

In addition, the first locking member may include: a first elastic body positioned at one side of the inner-diameter portion of the spur gear; a first roller elastically supported by the first elastic body at one end of the first elastic body; and a second roller elastically supported by the first elastic body at another end of the first elastic body.

In addition, the second locking member may include: a second elastic body positioned at another side of the inner-diameter portion of the spur gear; a third roller elastically supported by the second elastic body at one end of the second elastic body; and a fourth roller elastically supported by the second elastic body at another end of the second elastic body.

In addition, a first support surface, a second support surface, a third support surface, and a fourth support surface may be defined on and around the one end of the pinion pin, the first support surface may support a first roller of the first locking member, the second support surface may support a second roller of the first locking member, the third support surface may support a third roller of the second locking member, and the fourth support surface may support a fourth roller of the second locking member.

In addition, a width between the inner-diameter portion of the spur gear and the first support surface may increase from one end of the first support surface, which is directed toward an insertion portion for the first coupling protrusion, toward another end of the first support surface directed toward a first elastic body of the first locking member, a width between the inner-diameter portion of the spur gear and the second support surface may increase from one end of the second support surface, which is directed toward an insertion portion for the second coupling protrusion, toward another end of the second support surface directed toward the first elastic body, a width between the inner-diameter portion of the spur gear and the third support surface may increase from one end of the third support surface, which is directed toward the insertion portion for the first coupling protrusion, toward another end of the third support surface directed toward the second elastic body, and a width between the inner-diameter portion of the spur gear and the fourth support surface may increase from one end of the fourth support surface, which is directed toward the insertion portion for the second coupling protrusion, toward another end of the fourth support surface directed toward the second elastic body.

In addition, each of the first and second rollers may be configured to be fitted when each of the first and second rollers is positioned at the one end of each of the first and second support surfaces, and each of the first and second rollers may be configured to be released when each of the first and second rollers is positioned at the another end of each of the first and second support surfaces.

In addition, each of the third and fourth rollers may be configured to be fitted when each of the third and fourth rollers is positioned at the one end of each of the third and fourth support surfaces, and each of the third and fourth rollers may be configured to be released when each of the third and fourth rollers is positioned at the another end of each of the third and fourth support surfaces.

In addition, when the first and second coupling protrusions are inserted between the first and third rollers and between the second and fourth rollers, respectively, as the clutch drum is pushed in a direction toward the spur gear by a pressing device, the first and second rollers may be configured to move from the one ends toward the another ends of the first and second support surfaces, respectively, by being pushed by the first and second coupling protrusions, and the third and fourth rollers may be configured to move from the one ends toward the another ends of the third and fourth support surfaces, respectively, by being pushed by the first and second coupling protrusions.

In addition, when the first and second coupling protrusions separate from the insertion portion between the first and third rollers and the insertion portion between the second and fourth rollers as the clutch drum is pushed in a direction opposite to the spur gear by an elastic force of the elastic member, the first and second rollers may be configured to move from the another ends toward the one ends of the first and second support surfaces, respectively, by being pushed by the first elastic body, and the third and fourth rollers may be configured to move from the another ends toward the one ends of the third and fourth support surfaces, respectively, by being pushed by the second elastic body.

In addition, the apparatus may further include: a support member disposed between the clutch drum and the spur gear and coupled to the one end of the pinion pin so as to be biased toward the spur gear, the support member having at least one support protrusion disposed on one surface thereof.

In addition, the at least one support protrusion may include a first support protrusion and a second support protrusion, and the elastic member may be disposed between the clutch drum and the support member, the elastic member being configured to elastically support the clutch drum and the support member.

In addition, a housing may include the clutch drum, the elastic member, the support member, and the spur gear in the housing, and a cover may be coupled to an opening portion of the housing positioned at one side of the housing, and the first locking member may have one surface supported by the first support protrusion of the support member, the second locking member may have one surface supported by the second support protrusion of the support member, the first locking member may have another surface supported by the cover, and the second locking member may have another surface supported by the cover.

In addition, the first and second key grooves may be defined in an axial direction of the pinion pin on an outer surface of the one end of the pinion pin, and the first key and the second key may be slidable on the first key groove and the second key groove, respectively, in the axial direction of the pinion pin.

In addition, the first support surface and the second support surface may be inclined at a first predetermined angle from each other, when viewed in a front cross-section of the one end of the pinion pin, the first support surface and the third support surface may be inclined at a second predetermined angle from each other, when viewed in the front cross-section of the one end of the pinion pin, and the first predetermined angle is greater than the second predetermined angle.

In addition, the first predetermined angle may be greater than a central angle of a quarter of a circumference of the inner-diameter portion of the spur gear.

In addition, a first key groove may be defined between first support surface and the third support surface, and a second key groove may be defined between the second support surface and the fourth support surface, the first key groove and the second key groove extending in an axial direction of the pinion pin on the one end of the pinion pin.

In addition, the first support surface, the second support surface, the third support surface, and the fourth support surface may extend on the one end of the pinion pin in the axial direction of the pinion pin.

In addition, the first support protrusion and the second support protrusion may be symmetrical to each other, when viewed in a front cross section of the support member, and the one end of the pinion pin and the at least one coupling protrusion may penetrate the support member between the first support protrusion and the second support protrusion.

The present disclosure may implement various operating methods by controlling the transmission and interruption of power between the rack gear and the spur gear.

In addition, the present disclosure may enhance passenger satisfaction by diversifying options for seat sliding methods.

In addition, the present disclosure may apply a walk-in function into a long rail system.

The foregoing summary is illustrative only and is not intended to be in any way limiting. In addition to the illustrative aspects, embodiments, and features described above, further aspects, embodiments, and features will become apparent by reference to the drawings and the following detailed description.

### BRIEF DESCRIPTION OF THE DRAWINGS

FIG. 1 is a view illustrating a state in which an apparatus for moving a seat rail for a vehicle according to an exemplary embodiment of the present disclosure is mounted on a seat rail.
FIG. 2 is a perspective view of the apparatus for moving a seat rail for a vehicle according to the exemplary embodiment of the present disclosure.
FIG. 3 is an exploded perspective view of the apparatus for moving a seat rail for a vehicle according to the exemplary embodiment of the present disclosure.
FIG. 4 is a perspective view illustrating a state in which a cover is separated from a housing according to the exemplary embodiment of the present disclosure.
FIG. 5 is a side view of the apparatus for moving a seat rail for a vehicle according to the exemplary embodiment of the present disclosure.
FIG. 6 is a view illustrating an engagement operation of a clutch drum according to the exemplary embodiment of the present disclosure.
FIG. 7 is a view illustrating a disengagement operation of the clutch drum according to the exemplary embodiment of the present disclosure.
FIG. 8 is a front view illustrating a state in which a coupling protrusion of the clutch drum according to the exemplary embodiment of the present disclosure is inserted into an inner-diameter portion of a spur gear.

It should be understood that the appended drawings are not necessarily to scale, presenting a somewhat simplified representation of various features illustrative of the basic principles of the disclosure. The specific design features of the present disclosure as disclosed herein, including, for example, specific dimensions, orientations, locations, and shapes will be determined in part by the particular intended application and use environment.

In the figures, reference numbers refer to the same or equivalent parts of the present disclosure throughout the several figures of the drawing.

### DETAILED DESCRIPTION

Hereinafter, exemplary embodiments of the present disclosure will be described in detail with reference to the accompanying drawings. First, in assigning reference numerals to constituent elements of the respective drawings, it should be noted that the same constituent elements will be designated by the same reference numerals, if possible, even though the constituent elements are illustrated in different drawings. In addition, in the description of the present disclosure, the specific descriptions of publicly known related configurations or functions will be omitted when it is determined that the specific descriptions may obscure the subject matter of the present disclosure. Further, the exemplary embodiments of the present disclosure will be described below, but the technical spirit of the present disclosure is not limited thereto and may, of course, be modified and variously carried out by those skilled in the art.

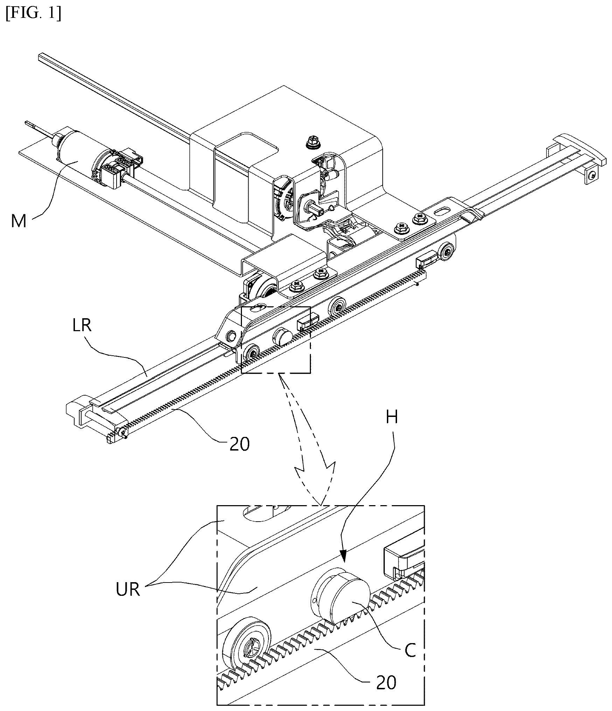

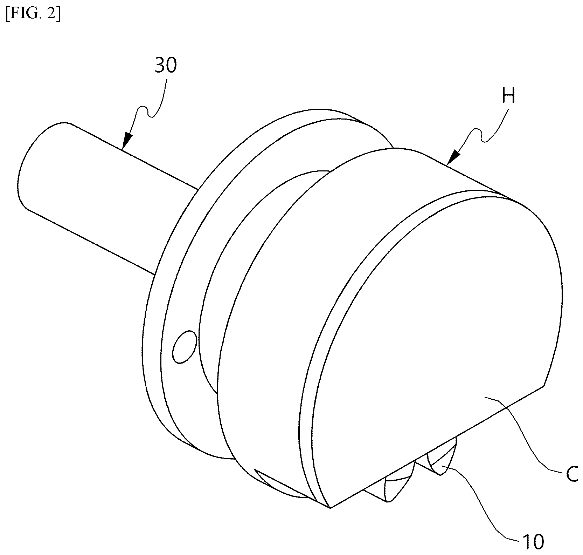

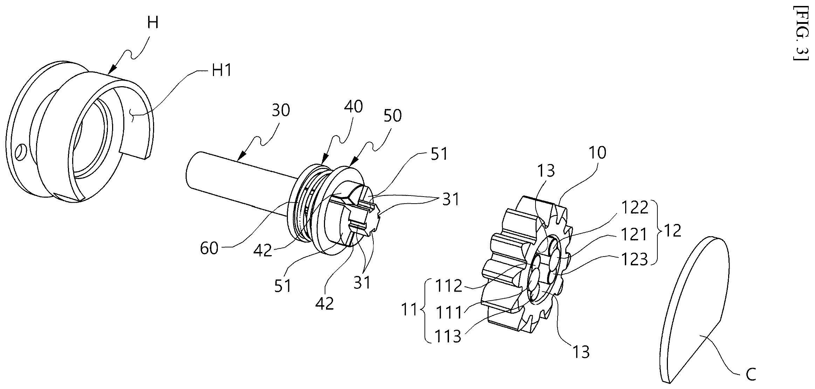

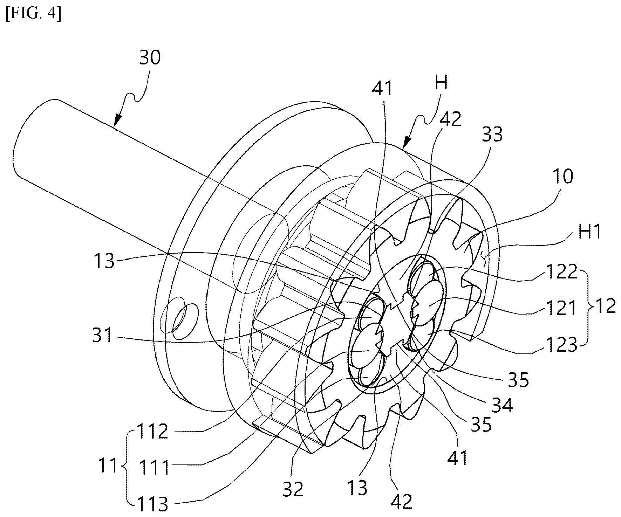

FIG. 1 is a view illustrating a state in which an apparatus for moving a seat rail for a vehicle according to an exemplary embodiment of the present disclosure is mounted on a seat rail. FIG. 2 is a perspective view of the apparatus for moving a seat rail for a vehicle according to the exemplary embodiment of the present disclosure. FIG. 3 is an exploded perspective view of the apparatus for moving a seat rail for a vehicle according to the exemplary embodiment of the present disclosure. FIG. 4 is a perspective view illustrating a state in which a cover is separated from a housing according to the exemplary embodiment of the present disclosure.

As illustrated in FIGS. 1 to 4, the apparatus for moving a seat rail for a vehicle may include a spur gear 10 configured to engage with a rack gear 20, a pinion pin 30 having one end inserted into an inner-diameter portion of the spur gear 10, a clutch drum 40 coupled to one end of the pinion pin 30, a support member 50 coupled to one end of the pinion pin 30 and positioned between the spur gear 10 and the clutch drum 40, and an elastic member 60 disposed between the clutch drum 40 and the support member 50 and configured to elastically support the clutch drum 40 and the support member 50.

The clutch drum 40, the elastic member 60, the support member 50, and the spur gear 10 may be coupled to one side end of the pinion pin 30 positioned in a housing H through one side opening portion H1 of the housing H.

A cover C may be coupled to one side opening portion H1 of the housing H in the state in which the clutch drum 40, the elastic member 60, the support member 50, and the spur gear 10 are coupled in the housing H.

The housing H may be mounted on an upper rail UR configured to move along a lower rail LR, and the rack gear 20 may be inserted and coupled into the lower rail LR. The lower rail LR may be fixed to a floor panel. The upper rail UR may be connected to a seat (not illustrated).

The spur gear 10 may engage with the rack gear 20 and move along the rack gear 20. A pair of first and second locking members 11 and 12 may be provided in the inner-diameter portion of the spur gear 10. The first locking member 11 and the second locking member 12 may be configured to be opposite to each other while facing each other.

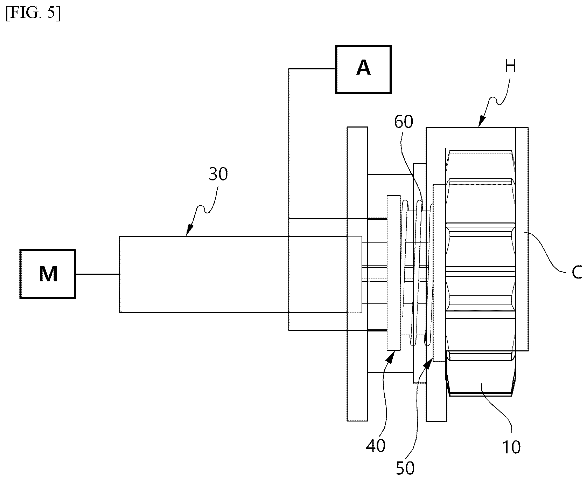

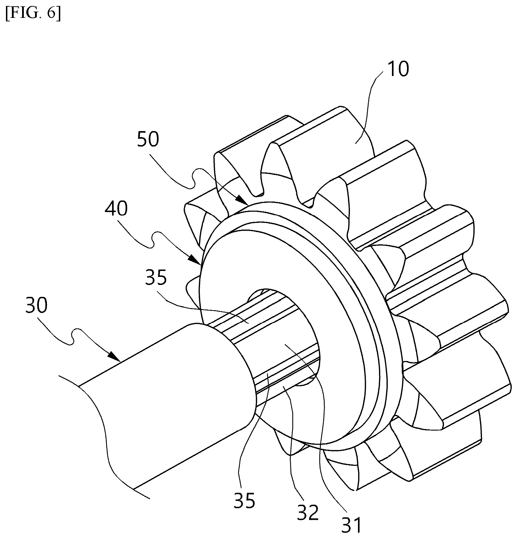

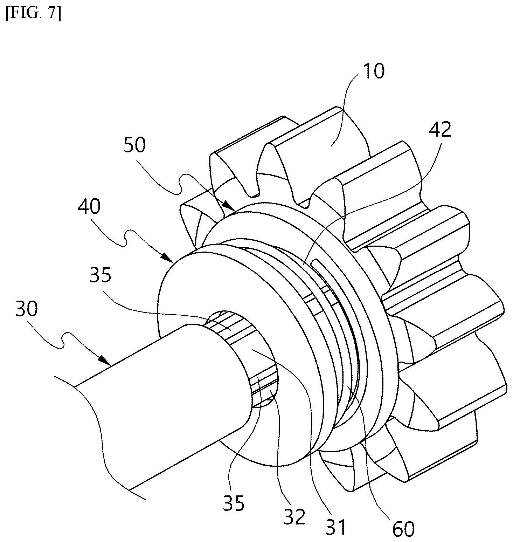

FIG. 5 is a side view of the apparatus for moving a seat rail for a vehicle according to the exemplary embodiment of the present disclosure. FIG. 6 is a view illustrating an engagement operation of the clutch drum according to the exemplary embodiment of the present disclosure. FIG. 7 is a view illustrating a disengagement operation of the clutch drum according to the exemplary embodiment of the present disclosure.

As illustrated in FIGS. 5 to 7, the pinion pin 30 may be connected to a power source M such as a motor. Power from the power source M may be transmitted to the spur gear 10 via the pinion pin 30.

One end of the pinion pin 30 may be inserted into the inner-diameter portion of the spur gear 10. One end of the pinion pin 30 may support the first locking member 11 and the second locking member 12. The first locking member 11 and the second locking member 12 may be positioned between one end of the pinion pin 30 and the inner-diameter portion of the spur gear 10.

The clutch drum 40 may be coupled to one end of the pinion pin 30. The clutch drum 40 may slide along the pinion pin 30. The clutch drum 40 may be configured to be opposite to the spur gear 10 at an interval.

The clutch drum 40 may have coupling protrusions 42. The coupling protrusion 42 may be configured in a circular arc shape. The coupling protrusions 42 may be provided as a pair of coupling protrusions 42 provided on one surface of the clutch drum 40. The pair of coupling protrusions 42 may be configured to face each other. The coupling protrusion 42 may be configured to be directed toward the inner-diameter portion of the spur gear 10. The coupling protrusion 42 may be inserted between one end of the pinion pin 30 and the inner-diameter portion of the spur gear 10.

Keys 41 may be provided in the inner-diameter portion of the coupling protrusion 42. The keys 41 of the coupling protrusions 42 may be inserted into key grooves 35 provided at one end of the pinion pin 30, and the keys 41 may slide. Because the keys 41 slide in the state in which the keys 41 are coupled to the key grooves 35, the clutch drum 40 may stably move.

The clutch drum 40 may be pushed in a direction toward the spur gear 10 by being pressed by a pressing device A such as an actuator.

The support member 50 may be coupled to one end of the pinion pin 30. The support member 50 may be positioned between the clutch drum 40 and the spur gear 10. The support member 50 may be coupled to be biased toward the spur gear 10. The support member 50 may be tightly attached to the spur gear 10.

The support member 50 may have a pair of support protrusions 51. The support protrusion 51 may be configured in a circular arc shape. For example, in case that the pair of coupling protrusions 42 of the clutch drum 40 are formed at upper and lower sides, the pair of support protrusions 51 of the support member 50 are formed at left and right sides to prevent the occurrence of interference.

The support protrusions 51 may be provided on one surface of the support member 50. The support protrusions 51 may be inserted into the inner-diameter portion of the spur gear 10. The support protrusions 51 may be configured to face each other.

The elastic member 60 may be a spring. The elastic member 60 may be coupled to one end of the pinion pin 30. The elastic member 60 may be disposed between the support member 50 and the clutch drum 40 and elastically support the support member 50 and the clutch drum 40. The elastic member 60 may be pushed and compressed by the clutch drum 40.

A first support surface 31, a second support surface 32, a third support surface 33, and a fourth support surface 34 may be provided at one end of the pinion pin 30. The key grooves 35 of the pinion pin 30 may be provided between the first support surface 31 and the third support surface 33 and between the second support surface 32 and the fourth support surface 34.

The first support surface 31, the second support surface 32, the third support surface 33, and the fourth support surface 34 may each be configured as an inclined surface.

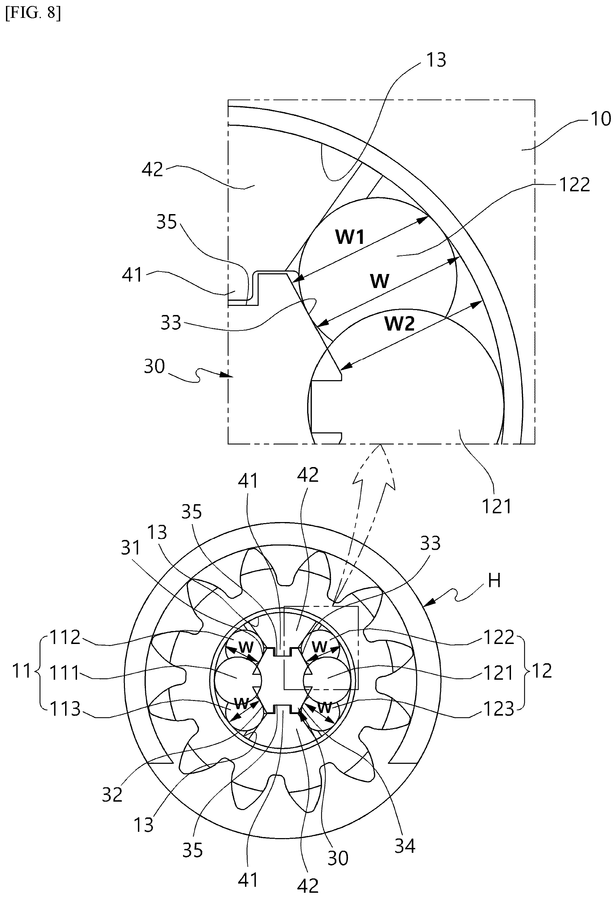

FIG. 8 is a front view illustrating a state in which the coupling protrusion of the clutch drum according to the exemplary embodiment of the present disclosure is inserted into the inner-diameter portion of the spur gear.

As illustrated in FIG. 8, the first locking member 11 and the second locking member 12 may be configured to have the same shape.

The first locking member 11 may be positioned at one side of the inner-diameter portion of the spur gear 10.

The first locking member 11 may include a first elastic body 111, a first roller 112, and a second roller 113.

The first elastic body 111 may be positioned at one side of the inner-diameter portion of the spur gear 10.

The first roller 112 may be elastically supported by the first elastic body 111 at one end of the first elastic body 111.

The second roller 113 may be elastically supported by the first elastic body 111 at the other end of the first elastic body 111.

The first roller 112 may be supported by the first support surface 31 of the pinion pin 30.

The second roller 113 may be supported by the second support surface 32 of the pinion pin 30.

A width W between the first support surface 31 and the inner-diameter portion of the spur gear 10 in which the first roller 112 is positioned may be configured to increase from one end of the first support surface 31, which is directed toward an insertion portion 13 for the coupling protrusion 42, toward the other end of the first support surface 31 directed toward the first elastic body 111.

A width W1 between the inner-diameter portion of the spur gear 10 and one end of the first support surface 31 is equal to or smaller than an outer diameter of the first roller 112, such that the first roller 112 may be fitted when the first roller 112 is positioned at one end of the first support surface 31.

A width W2 between the inner-diameter portion of the spur gear 10 and the other end of the first support surface 31 is larger than the outer diameter of the first roller 112, such that the first roller 112 may be released when the first roller 112 is positioned at the other end of the first support surface 31.

The width W between the second support surface 32 and the inner-diameter portion of the spur gear 10 in which the second roller 113 is positioned may be configured to increase from one end of the second support surface 32, which is directed toward the insertion portion 13 for the coupling protrusion 42, toward the other end of the second support surface 32 directed toward the first elastic body 111.

The width W1 between the inner-diameter portion of the spur gear 10 and one end of the second support surface 32 is equal to or smaller than an outer diameter of the second roller 113, such that the second roller 113 may be fitted when the second roller 113 is positioned at one end of the second support surface 32.

The width W2 between the inner-diameter portion of the spur gear 10 and the other end of the second support surface 32 is larger than the outer diameter of the second roller 113, such that the second roller 113 may be released when the second roller 113 is positioned at the other end of the second support surface 32.

One surface of each of the first elastic body 111 and the first and second rollers 112 and 113 may be supported by the support protrusions 51 of the support member 50. The other surface of each of the first elastic body 111 and the first and second rollers 112 and 113 may be supported by the cover C coupled to one side opening portion H1 of the housing H.

The second locking member 12 may be positioned at the other side of the inner-diameter portion of the spur gear 10.

The second locking member 12 may include a second elastic body 121, a third roller 122, and a fourth roller 123.

The second elastic body 121 may be positioned at the other side of the inner-diameter portion of the spur gear 10.

The third roller 122 may be elastically supported by the second elastic body 121 at one end of the second elastic body 121.

The fourth roller 123 may be elastically supported by the second elastic body 121 at the other end of the second elastic body 121.

The third roller 122 may be supported by the third support surface 33 of the pinion pin 30.

The fourth roller 123 may be supported by the fourth support surface 34 of the pinion pin 30.

The width W between the third support surface 33 and the inner-diameter portion of the spur gear 10 in which the third roller 122 is positioned may be configured to increase from one end of the third support surface 33, which is directed toward the insertion portion 13 for the coupling protrusion 42, toward the other end of the third support surface 33 directed toward the second elastic body 121.

The width W1 between the inner-diameter portion of the spur gear 10 and one end of the third support surface 33 is equal to or smaller than an outer diameter of the third roller 122, such that the third roller 122 may be fitted when the third roller 122 is positioned at one end of the third support surface 33.

The width W2 between the inner-diameter portion of the spur gear 10 and the other end of the third support surface 33 is larger than the outer diameter of the third roller 122, such that the third roller 122 may be released when the third roller 122 is positioned at the other end of the third support surface 31.

The width W between the fourth support surface 34 and the inner-diameter portion of the spur gear 10 in which the fourth roller 123 is positioned may be configured to increase from one end of the fourth support surface 34, which is directed toward the insertion portion 13 for the coupling protrusion 42, toward the other end of the fourth support surface 34 directed toward the second elastic body 121.

The width W1 between the inner-diameter portion of the spur gear 10 and one end of the fourth support surface 34 is equal to or smaller than an outer diameter of the fourth roller 123, such that the fourth roller 123 may be fitted when the fourth roller 123 is positioned at one end of the fourth support surface 34.

The width W2 between the inner-diameter portion of the spur gear 10 and the other end of the fourth support surface 34 is larger than the outer diameter of the fourth roller 123, such that the fourth roller 123 may be released when the fourth roller 123 is positioned at the other end of the fourth support surface 34.

One surface of each of the second elastic body 121 and the third and fourth rollers 122 and 123 may be supported by the support protrusions 51 of the support member 50. The other surface of each of the second elastic body 121 and the third and fourth rollers 122 and 123 may be supported by the cover C coupled to one side opening portion H1 of the housing H.

For example, keys may be formed on outer-diameter portions of the first and second elastic bodies 111 and 121, and key grooves, into which the keys of the first and second elastic bodies 111 and 121 are inserted, may be formed at one end of the pinion pin 30.

Next, the engagement operation of the clutch drum of the present disclosure will be described.

As illustrated in FIGS. 5, 6, and 8, when a pressing force of the pressing device A is applied to the clutch drum 40, the clutch drum 40 may move in the direction toward the spur gear 10 while pressing the elastic member 60.

As the clutch drum 40 moves in a coupling direction, the coupling protrusions 42 of the clutch drum 40 may be inserted into the insertion portion 13, for the coupling protrusion 42, formed in the inner-diameter portion of the spur gear 10.

The insertion portions 13 for the coupling protrusions 42 may be formed by assembling one end of the pinion pin 30 and the first and second locking members 11 and 12 to the inner-diameter portion of the spur gear 10.

The pair of coupling protrusions 42 of the clutch drum 40 may be inserted between the first and third rollers 112 and 122 and between the second and fourth rollers 113 and 123.

The first roller 112 moves from one end toward the other end of the first support surface 31 by being pushed by the coupling protrusion 42, such that the first roller 112 may be released.

The second roller 113 moves from one end toward the other end of the second support surface 32 by being pushed by the coupling protrusion 42, such that the second roller 113 may be released.

The third roller 122 moves from one end toward the other end of the third support surface 33 by being pushed by the coupling protrusion 42, such that the third roller 122 may be released.

The fourth roller 123 moves from one end toward the other end of the fourth support surface 34 by being pushed by the coupling protrusion 42, such that the fourth roller 123 may be released.

When power from the power source M, such as a motor, is transmitted to the pinion pin 30 in the released state in which the first to fourth rollers 112, 113, 122, and 123 may move freely, one end of the pinion pin 30 coupled to the inner-diameter portion of the spur gear 10 idles, such that the transmission of power to the spur gear 10 may be interrupted.

Because the transmission of power to the spur gear 10 is interrupted, the spur gear 10 cannot move along the rack gear 20.

Next, the disengagement operation of the clutch drum of the present disclosure will be described.

FIG. 7 is a view illustrating the disengagement operation of the clutch drum according to the exemplary embodiment of the present disclosure.

As illustrated in FIGS. 5, 7, and 8, in case that the pressing force of the pressing device A is not applied to the clutch drum 40, the elastic member 60, which has been pushed and compressed by the clutch drum 40, may extend to an original state and push the clutch drum 40 in a direction opposite to the spur gear 10.

As the clutch drum 40 is pushed in the direction opposite to the spur gear 10, the coupling protrusions 42 of the clutch drum 40 may completely separate from the insertion portions 13 of the inner-diameter portion of the spur gear 10.

When the coupling protrusions 42 of the clutch drum 40 separate from the inner-diameter portion of the spur gear 10, the first and second elastic bodies 111 and 121, which have been pushed and compressed by the coupling protrusions 42, may be restored to the original states.

The first roller 112 is moved from the other end toward one end of the first support surface 31 by being pushed by the first elastic body 111 restored to the original state, such that the first roller 112 may be fitted.

The second roller 113 is moved from the other end toward one end of the second support surface 32 by being pushed by the first elastic body 111 restored to the original state, such that the second roller 113 may be fitted.

The third roller 122 is moved from the other end toward one end of the third support surface 33 by being pushed by the second elastic body 121 restored to the original state, such that the third roller 122 may be fitted.

The fourth roller 123 is moved from the other end toward one end of the fourth support surface 34 by being pushed by the second elastic body 121 restored to the original state, such that the fourth roller 123 may be fitted.

The pinion pin 30 may rotate when the power from the power source M is transmitted to the pinion pin 30 in the state in which the first to fourth rollers 112, 113, 122, and 123 are fitted.

When the pinion pin 30 rotates, a rotational force of the pinion pin 30 is transmitted to the spur gear 10, such that the spur gear 10 may move along the rack gear 20.

In the state in which the first to fourth rollers 112, 113, 122, and 123 are fitted, the rotational force of the pinion pin 30 may be transmitted to the spur gear 10 via the first and second locking members 11 and 12.

As described above, according to the present disclosure, the first and second locking members provided in the inner-diameter portion of the spur gear are fitted by the disengagement operation of the clutch drum, such that the power from the power source may be transmitted to the spur gear via the pinion pin. In addition, according to the present disclosure, the first and second locking members provided in the inner-diameter portion of the spur gear are released by the engagement operation of the clutch drum, such that the power from the power source may be prevented from being transmitted to the spur gear via the pinion pin.

The above description is simply given for illustratively describing the technical spirit of the present disclosure, and those skilled in the art to which the present disclosure pertains will appreciate that various modifications, changes, and substitutions are possible without departing from the essential characteristics of the present disclosure. Accordingly, the embodiments disclosed in the present disclosure and the accompanying drawings are intended not to limit but to describe the technical spirit of the present disclosure, and the scope of the technical spirit of the present disclosure is not limited by the embodiments and the accompanying drawings. The protective scope of the present disclosure should be construed based on the following claims, and all the technical spirit in the equivalent scope thereto should be construed as falling within the scope of the present disclosure.

As described above, the exemplary embodiments have been described and illustrated in the drawings and the specification. The exemplary embodiments were chosen and described in order to explain certain principles of the disclosure and their practical application, to thereby enable others skilled in the art to make and utilize various exemplary embodiments of the present disclosure, as well as various alternatives and modifications thereof. As is evident from the foregoing description, certain aspects of the present disclosure are not limited by the particular details of the examples illustrated herein, and it is therefore contemplated that other modifications and applications, or equivalents thereof, will occur to those skilled in the art. Many changes, modifications, variations and other uses and applications of the present construction will, however, become apparent to those skilled in the art after considering the specification and the accompanying drawings. All such changes, modifications, variations and other uses and applications which do not depart from the spirit and scope of the disclosure are deemed to be covered by the disclosure which is limited only by the claims which follow.

### [Description of Reference Numerals]

10: Spur gear
11: First locking member
111: First elastic body
112: First roller
113: Second roller
12: Second locking member
121: Second elastic body
122: Third roller
123: Fourth roller
13: Insertion portion
20: Rack gear
30: Pinion pin
31: First support surface
32: Second support surface
33: Third support surface
34: Fourth support surface
35: Key groove
40: Clutch drum
42: Coupling protrusion
41: Key
50: Support member
51: Support protrusion
60: Elastic member
A: Pressing device
M: Power source
H: Housing
H1: Opening portion
C: Cover
UR: Upper rail
LR: Lower rail
W: Width
W1: Width
W2: Width

## Claims

1. An apparatus for moving a seat rail for a vehicle, the apparatus comprising:
a spur gear configured to be movable along a rack gear and having at least one locking member;
a pinion pin having one end inserted into an inner-diameter portion of the spur gear to support the at least one locking member; and
a clutch drum configured to interrupt transmission of power from the pinion pin to the spur gear.

2. The apparatus of claim **1,**
wherein the at least one locking member comprises a first locking member and a second locking member,
wherein the first locking member and the second locking member are supported by the one end of the pinion pin,
wherein the clutch drum is coupled to the one end of the pinion pin so as to be opposite to the spur gear and configured to be elastically supported by an elastic member, and
wherein at least one coupling protrusion disposed on one surface of the clutch drum is configured to be inserted between the first locking member and the second locking member and to interrupt the transmission of power to the spur gear, the at least one coupling protrusion including a first coupling protrusion and a second coupling protrusion.

3. The apparatus of claim 2,
wherein a first key is disposed on an inner-diameter portion of the first coupling protrusion, and a second key is disposed on an inner-diameter portion of the second coupling protrusion,
wherein the first key and the second key are inserted into first and second key grooves disposed at the one end of the pinion pin, the first key and second key being slidable along the first and second key grooves, respectively,
wherein, optionally, the first and second key grooves are defined in an axial direction of the pinion pin on an outer surface of the one end of the pinion pin, and the first key and the second key are slidable on the first key groove and the second key groove, respectively, in the axial direction of the pinion pin.

4. The apparatus of claim 2 or 3, wherein the first locking member comprises:
a first elastic body positioned at one side of the inner-diameter portion of the spur gear;
a first roller elastically supported by the first elastic body at one end of the first elastic body; and
a second roller elastically supported by the first elastic body at another end of the first elastic body.

5. The apparatus of anyone of claims 2-4, wherein the second locking member comprises:
a second elastic body positioned at another side of the inner-diameter portion of the spur gear;
a third roller elastically supported by the second elastic body at one end of the second elastic body; and
a fourth roller elastically supported by the second elastic body at another end of the second elastic body.

6. The apparatus of anyone of claims 2-5, wherein a first support surface, a second support surface, a third support surface, and a fourth support surface are defined on and around the one end of the pinion pin, the first support surface supports a first roller of the first locking member, the second support surface supports a second roller of the first locking member, the third support surface supports a third roller of the second locking member, and the fourth support surface supports a fourth roller of the second locking member.

7. The apparatus of claim 6,
wherein a width between the inner-diameter portion of the spur gear and the first support surface increases from one end of the first support surface, which is directed toward an insertion portion for the first coupling protrusion, toward another end of the first support surface directed toward a first elastic body of the first locking member,
wherein a width between the inner-diameter portion of the spur gear and the second support surface increases from one end of the second support surface, which is directed toward an insertion portion for the second coupling protrusion, toward another end of the second support surface directed toward the first elastic body,
wherein a width between the inner-diameter portion of the spur gear and the third support surface increases from one end of the third support surface, which is directed toward the insertion portion for the first coupling protrusion, toward another end of the third support surface directed toward a second elastic body of the second locking member, and
wherein a width between the inner-diameter portion of the spur gear and the fourth support surface increases from one end of the fourth support surface, which is directed toward the insertion portion for the second coupling protrusion, toward another end of the fourth support surface directed toward the second elastic body.

8. The apparatus of claim 6 or 7,
wherein each of the first and second rollers is configured to be fitted when each of the first and second rollers is positioned at the one end of each of the first and second support surfaces, and each of the first and second rollers is configured to be released when each of the first and second rollers is positioned at the another end of each of the first and second support surfaces,
and/or
wherein each of the third and fourth rollers is configured to be fitted when each of the third and fourth rollers is positioned at the one end of each of the third and fourth support surfaces, and each of the third and fourth rollers is configured to be released when each of the third and fourth rollers is positioned at the another end of each of the third and fourth support surfaces.

9. The apparatus of anyone of claims 6-8, wherein when the first and second coupling protrusions are inserted between the first and third rollers and between the second and fourth rollers, respectively, as the clutch drum is pushed in a direction toward the spur gear by a pressing device, the first and second rollers are configured to move from the one ends toward the another ends of the first and second support surfaces, respectively, by being pushed by the first and second coupling protrusions, and the third and fourth rollers are configured to move from the one ends toward the another ends of the third and fourth support surfaces, respectively, by being pushed by the first and second coupling protrusions.

10. The apparatus of anyone of claims 6-9, wherein when the first and second coupling protrusions separate from the insertion portion between the first and third rollers and the insertion portion between the second and fourth rollers as the clutch drum is pushed in a direction opposite to the spur gear by an elastic force of the elastic member, the first and second rollers are configured to move from the another ends toward the one ends of the first and second support surfaces, respectively, by being pushed by the first elastic body, and the third and fourth rollers are configured to move from the another ends toward the one ends of the third and fourth support surfaces, respectively, by being pushed by the second elastic body.

11. The apparatus of anyone of claims 2-10, further comprising:
a support member disposed between the clutch drum and the spur gear and coupled to the one end of the pinion pin so as to be biased toward the spur gear, the support member having at least one support protrusion disposed on one surface thereof.

12. The apparatus of claim 11, wherein the at least one support protrusion includes a first support protrusion and a second support protrusion, and the elastic member is disposed between the clutch drum and the support member, the elastic member being configured to elastically support the clutch drum and the support member,
wherein, optionally, the first support protrusion and the second support protrusion are symmetrical to each other, when viewed in a front cross section of the support member, wherein, further optionally, the one end of the pinion pin and the at least one coupling protrusion penetrate the support member between the first support protrusion and the second support protrusion.

13. The apparatus of claim 12, wherein a housing includes the clutch drum, the elastic member, the support member, and the spur gear in the housing, and a cover is coupled to an opening portion of the housing positioned at one side of the housing, and
wherein the first locking member has one surface supported by the first support protrusion of the support member, and the second locking member has one surface supported by the second support protrusion of the support member, and
wherein the first locking member has another surface supported by the cover, and the second locking member has another surface supported by the cover.

14. The apparatus of anyone of claims 6-10, or of anyone of claims 11-13 provided that in combination with claim 6,
wherein the first support surface and the second support surface are inclined at a first predetermined angle from each other, when viewed in a front cross-section of the one end of the pinion pin,
wherein the first support surface and the third support surface are inclined at a second predetermined angle from each other, when viewed in the front cross-section of the one end of the pinion pin,
wherein the first predetermined angle is greater than the second predetermined angle,
wherein, optionally, the first predetermined angle is greater than a central angle of a quarter of a circumference of the inner-diameter portion of the spur gear.

15. The apparatus of anyone of claims 6-10, or of anyone of claims 11-14 provided that in combination with claim 6, wherein a first key groove is defined between first support surface and the third support surface, and a second key groove is defined between the second support surface and the fourth support surface, the first key groove and the second key groove extending in an axial direction of the pinion pin on the one end of the pinion pin,
wherein, optionally, the first support surface, the second support surface, the third support surface, and the fourth support surface extend on the one end of the pinion pin in the axial direction of the pinion pin.
